# FASCICULE DE BREVET EUROPEEN

(11) **EP 2 359 110 B1**
(45) Date de publication et mention de la délivrance du brevet: **26.04.2017**
(21) Numéro de dépôt: 09759753.8
(22) Date de dépôt: 03.11.2009
(51) Int. Cl.: G01J 3/02, G01J 3/443, G01N 21/27, G01N 21/71

(54) **DISPOSITIF D'ANALYSE DE MATERIAUX PAR SPECTROSCOPIE DE PLASMA**
EINRICHTUNG ZUM ANALYSIEREN VON MATERIALIEN DURCH PLASMASPEKTROSKOPIE
DEVICE FOR ANALYSING MATERIALS BY PLASMA SPECTROSCOPY

(30) Priorité: 28.11.2008 FR 0806712
(43) Date de publication de la demande: 24.08.2011
(73) Titulaire: Bertin Technologies, 78180 Montigny-le-Bretonneux (FR)
(72) Inventeur: SENAC Stéphane, 13100 Beaurecueil (FR)
(74) Mandataire: Ramey, Daniel
(86) Numéro de dépôt international: PCT/FR2009/001272
(87) Numéro de publication internationale: WO 2010/061069

(56) Documents cités:
- US-A1- 2005 229 698
- FICHET P ET AL: "DETERMINATION OF IMPURITIES IN URANIUM AND PLUTONIUM DIOXIDES BY LASER-INDUCED BREAKDOWN SPECTROSCOPY" APPLIED SPECTROSCOPY, THE SOCIETY FOR APPLIED SPECTROSCOPY. BALTIMORE, US, vol. 53, no. 9, 1 septembre 1999 (1999-09-01), pages 1111-1117, XP000903103 ISSN: 0003-7028

## Description

L'invention concerne un dispositif d'analyse de matériaux par spectroscopie de plasma.

La détermination ou la vérification des compositions chimiques de matériaux ou d'objets divers, en raison notamment de la complexité croissante des matériaux utilisés dans l'industrie, et d'une volonté de respect de l'environnement (recyclage, contrôle sanitaire, ...), amène à développer des techniques de contrôle et de mesure utilisables sur place et en temps réel, qui évitent le prélèvement d'échantillons et l'envoi de ces échantillons à des laboratoires d'analyse.

Les techniques actuellement disponibles comprennent la spectroscopie à étincelles, la spectroscopie à fluorescence X et la spectroscopie de plasma induite par laser.

De façon résumée, les dispositifs de spectroscopie par étincelles, qui génèrent un plasma via un arc électrique entre le matériau à analyser et une anode dans laquelle on fait passer une impulsion électrique, ont pour inconvénients essentiels de ne pas être portables, de nécessiter de préparer des échantillons des matériaux, de ne fonctionner qu'avec des matériaux électroconducteurs, et de nécessiter une mise en contact avec le matériau analysé, ce qui rend l'utilisation de cette technique difficile ou impossible sur des objets en mouvement, des objets à température élevée ou des objets placés dans un environnement contaminé, difficile ou dangereux.

Les dispositifs de fluorescence X sont portables mais ne permettent pas de mesurer des éléments plus légers que le silicium. Ils nécessitent d'être amenés au contact des matériaux des objets à analyser et sont soumis à des contraintes réglementaires et de sécurité.

De façon pratique, ils ne permettent pas de faire des mesures sur des nuances d'aluminium qui se distinguent les unes des autres par le silicium ou le magnésium, sur des aciers pour lesquels il faut mesurer la teneur en carbone et sur des composés organiques à base de carbone, d'hydrogène, d'azote et d'oxygène.

Les dispositifs existants de spectroscopie de plasma induit par laser ou dispositifs LIBS (Laser Induced Breakdown Spectroscopy) sont essentiellement des appareils de laboratoire, qui sont à la rigueur transportables mais qui ne sont pas portables et autonomes, essentiellement en raison du fait qu'ils utilisent des générateurs laser de laboratoire qui sont de grande taille et encombrants et parce qu'ils comprennent une série de spectromètres pour l'analyse des composantes spectrales du plasma dans différentes plages de longueur d'ondes. L'intégration dans ces appareils de plusieurs spectromètres augmente leur coût et leur poids. De plus, le signal utile reçu par chaque spectromètre n'est qu'une fraction du signal utile émis par le plasma, ce qui dégrade le bilan photométrique et nuit à la sensibilité des mesures.

En outre, dans ces dispositifs connus de spectroscopie de plasma, le générateur laser est souvent relié à une sonde de mesure par une fibre optique, ce qui ne permet pas de transporter des énergies laser importantes à des longueurs d'ondes inférieures à 532 nm et de faire des mesures sur des matériaux plastiques ou sur des composés organiques pour lesquels il est préférable d'utiliser un faisceau laser ultraviolet ayant une longueur d'onde de 266 nm. Par ailleurs, la fibre optique casse la brillance du faisceau laser (égale à son énergie divisée par le produit de la surface d'émission et de l'angle solide d'émission), de sorte qu'il est plus difficile de focaliser le faisceau sur le matériau ou l'objet à analyser et impose d'effectuer les mesures au contact de l'objet ou amène à augmenter la taille des composants optiques utilisés, ce qui se traduit par une augmentation de leur encombrement et de leur coût. Des exemples de l'état de la technique sont décrits dans le brevet US20050229698 et l'article "Détermination of impurities in uranium and plutonium dioxides by laser-induced breakdown spectroscopy" de Fichet et al., Applied Spectroscopy, Vol. 53, Nr. 9, 1999.

La présente invention a notamment pour but d'apporter une solution simple, efficace et économique à ces problèmes.

Elle a pour objet un dispositif de spectroscopie de plasma induit par laser (LIBS) qui soit portable et autonome, qui ait une grande sensibilité et une grande précision et qui soit utilisable sur tout type de matériau, aussi bien sur le terrain in situ qu'en ligne sur une chaîne de traitement de matériaux ou d'objets.

Elle propose à cet effet un dispositif d'analyse de matériau par spectroscopie de plasma, comprenant un générateur laser, des moyens de focalisation d'impulsions laser produits par le générateur sur un matériau à analyser, des moyens de captation de la lumière du plasma produit par les impulsions laser à la surface du matériau et des moyens de transmission de cette lumière à un spectromètre associé à des photodétecteurs reliés en sortie à des moyens de traitement de l'information, caractérisé en ce que les moyens de focalisation des impulsions laser et les moyens de captation de la lumière du plasma sont constitués d'un système optique monté avec le générateur laser et des cartes de contrôle du générateur laser dans un boîtier portable et manipulable d'une main, le système optique étant monté dans le boîtier entre le générateur laser et un hublot de sortie et comprenant un premier miroir parabolique pour la focalisation des impulsions laser sur le matériau à analyser et la captation de la lumière du plasma, et deux miroirs plans agencés par rapport au premier miroir parabolique pour renvoyer vers ce miroir les impulsions laser émis par le générateur et pour renvoyer la lumière du plasma reçue du premier miroir parabolique vers un second miroir parabolique focalisant cette lumière sur une extrémité des moyens de transmission reliés au spectromètre.

Cette configuration présente un certain nombre d'avantages :
- les impulsions produites par le générateur laser ne sont pas transmises par une fibre optique,
- le système optique à deux miroirs paraboliques est très compact et permet aussi bien la transmission des impulsions laser et leur focalisation sur la surface du matériau ou de l'objet à analyser que la transmission de la lumière du plasma et sa focalisation sur les moyens de liaison au spectromètre d'analyse,
- le dispositif est utilisable sur une ligne de production.

Avantageusement, le premier miroir parabolique comprend une zone de réflexion des impulsions laser et une zone de réflexion de la lumière captée, ces deux zones étant adjacentes et extérieures l'une à l'autre et comportant des revêtements réfléchissants adaptés aux longueurs d'onde à réfléchir.

Selon une autre caractéristique de l'invention, le premier miroir parabolique est déplaçable le long de l'axe d'incidence des impulsions laser, pour un balayage en translation de la surface du matériau à analyser.

Avantageusement, ce premier miroir parabolique est monté sur un support motorisé qui est commandé par les moyens de commande du générateur laser.

Cela permet de balayer la surface du matériau à analyser sur une certaine longueur et de réaliser automatiquement un certain nombre de mesures en différents points de la ligne de balayage de la surface du matériau. Le traitement des signaux captés permet ensuite de filtrer les mesures erronées dues à des impuretés ou à des défauts ponctuels de composition et d'utiliser une moyenne des spectres des différentes mesures réalisées pour effectuer l'analyse. On peut ainsi s'affranchir des hétérogénéités locales du matériau, on peut effectuer des mesures sur des matériaux faiblement hétérogènes et on améliore la répétabilité et la justesse des mesures.

Selon une autre caractéristique de l'invention, un embout de mesure monté sur le boîtier en regard du hublot de sortie comprend un miroir de calibration associé à un échantillon de calibration également monté dans cet embout, de telle sorte que, quand le premier miroir parabolique se trouve à une extrémité de sa course, les impulsions laser déviées par ce miroir rencontrent le miroir de calibration et sont renvoyées sur l'échantillon de calibration.

Ces moyens de calibration permettent de corriger d'éventuelles dérives spectrales du spectromètre dues à la température et de corriger et vérifier les courbes de calibration qui sont utilisées pour la détermination des concentrations des composants des matériaux analysés.

On peut également prévoir un bouchon de calibration, qui peut être monté sur l'embout de mesure ou à la place de cet embout de mesure, ce bouchon comportant un support motorisé portant un certain nombre d'échantillons de matériaux différents qui sont destinés à être placés l'un après l'autre sur l'axe des impulsions laser à la sortie du dispositif.

Cela permet de réaliser, à intervalles réguliers ou non, une calibration automatique du dispositif en fonction du type d'analyses à effectuer, lorsque la précision analytique recherchée est maximale.

On peut par exemple utiliser des bouchons de calibration différents pour réaliser des mesures sur des matériaux différents (de l'aluminium, de l'acier, un matériau plastique, etc...).

Selon encore une autre caractéristique de l'invention, le spectromètre de ce dispositif comprend un boîtier formé avec une fente d'entrée équipée d'un connecteur de raccordement à une fibre optique de transmission de la lumière du plasma, un réseau de diffraction agencé dans l'alignement de cette fente, un miroir de renvoi recevant la lumière sortant du réseau et au moins un détecteur linéaire à photodétecteurs recevant la lumière réfléchie par ce miroir.

Avantageusement, le spectromètre comprend au moins deux détecteurs linéaires sensiblement juxtaposés, et couvrant des plages distinctes du spectre lumineux, par exemple de 200 à 240 nm et de 300 à 340 nm, selon les types de matériau à analyser.

Le montage d'un seul spectromètre dans le dispositif selon l'invention est économique et efficace, car il évite de partager sur plusieurs spectromètres le flux lumineux capté par le dispositif.

L'utilisation de plusieurs détecteurs linéaires permet des mesures très précises sur plusieurs plages de longueurs d'ondes.

Selon une autre caractéristique de l'invention, ce dispositif comprend également des moyens d'injection d'un gaz neutre sur la zone de formation de plasma à la surface du matériau à analyser, ces moyens étant facilement amovibles et remplaçables et comprenant une cartouche de gaz neutre portée par le boîtier et équipée d'une électrovanne de sortie qui est reliée par un conduit à l'embout de mesure.

Cela permet d'améliorer la précision de mesure et de réaliser in situ des mesures sur des atomes normalement présents dans l'air tels que l'azote, le carbone, l'hydrogène et l'oxygène.

Le dispositif selon l'invention peut également comprendre des moyens de réchauffage du plasma produit à la surface du matériau, ces moyens de réchauffage comprenant avantageusement une diode laser émettant un faisceau lumineux focalisé par le premier miroir parabolique sur le plasma.

Le réchauffage du plasma permet d'augmenter le niveau de signal et la sensibilité de la mesure. Il est connu dans la technique de procéder à ce réchauffage en utilisant deux impulsions laser (« double pulse »), pour augmenter la durée de vie du plasma, réduire le bruit de la mesure et augmenter la stabilité du plasma. Toutefois, la production d'une impulsion double nécessite des adaptations du générateur laser, et l'énergie de chaque impulsion est divisée par deux. Il est donc plus avantageux d'utiliser une diode laser, que l'on peut piloter en puissance, en énergie et en cadence de fonctionnement. On dispose alors d'une énergie importante et le réchauffage du plasma peut être fait à distance.

Dans un premier mode de réalisation, le boîtier portable précité contenant le générateur laser peut être relié à un autre coffret contenant le spectromètre, ainsi que des moyens d'alimentation électrique, par exemple du type à batterie, et une carte de commande-contrôle et de traitement informatique.

Dans ce mode de réalisation, le poids du boîtier contenant le générateur laser est d'environ 2 kg et celui du coffret est d'environ 3 à 4 kg.

Dans un autre mode de réalisation, le spectromètre, des moyens d'alimentation électrique par exemple du type à batterie, et la carte de commande-contrôle et de traitement sont rapportés et fixés sur le boîtier contenant le générateur laser.

On dispose alors d'un appareil unique qui est portable et totalement autonome, d'un poids d'environ 3,5 kg.

Selon une autre caractéristique de l'invention, ce dispositif peut aussi être utilisé sur une ligne de production. Il est alors avantageusement équipé d'un système de balayage ou de déflexion de faisceau optique et est typiquement situé à une distance de 10 à 100 cm des produits à contrôler.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective d'un premier mode de réalisation de l'invention,
- la figure 2 est une vue schématique partielle en coupe de l'appareil de la figure 1,
- les figures 3 et 4 sont des vues schématiques partielles en coupe illustrant le fonctionnement de cet appareil,
- la figure 5 représente schématiquement le spectromètre de l'appareil selon l'invention,
- la figure 6 représente schématiquement un bouchon de calibration,
- les figures 7, 8 et 9 sont des vues schématiques de variantes de réalisation de l'invention.

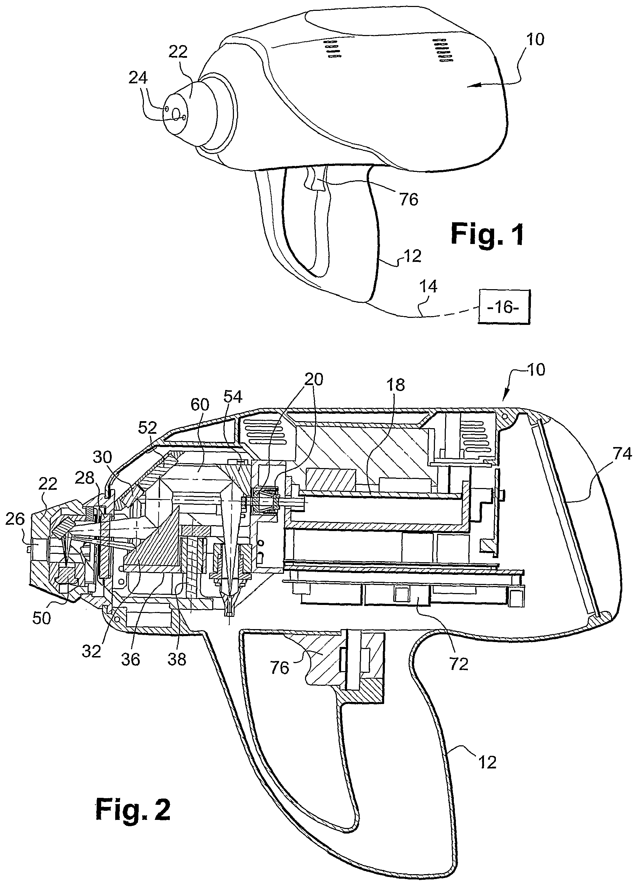

Les figures 1 à 5 représentent un premier mode de réalisation de l'invention, dans lequel un boîtier 10 équipé d'une poignée 12 est relié par un câble 14 à un coffret 16 contenant notamment un spectromètre et des moyens d'alimentation électrique, du type à batterie.

Le boîtier 10 contient (figure 2) un générateur laser 18 dont la sortie est orientée axialement vers l'avant du boîtier 10 et comporte deux lentilles 20 en silice traversées par les impulsions laser émises par le générateur 18.

L'extrémité avant du boîtier 10 porte un embout 22 de mesure, destiné à être appliqué sur le matériau ou l'objet à analyser et dont l'extrémité comporte deux contacts mobiles 24 de sécurité autorisant le fonctionnement du dispositif quand ils sont enfoncés en position de service par appui de l'embout 22 sur le matériau ou l'objet à analyser.

L'embout 22 est tubulaire et comporte un orifice axial 26 de sortie des impulsions laser et de captation de lumière.

L'extrémité avant du boîtier 10 sur laquelle est monté l'embout 22 comporte également un hublot 28, par exemple en silice fondue, de sortie des impulsions laser et de captation de lumière.

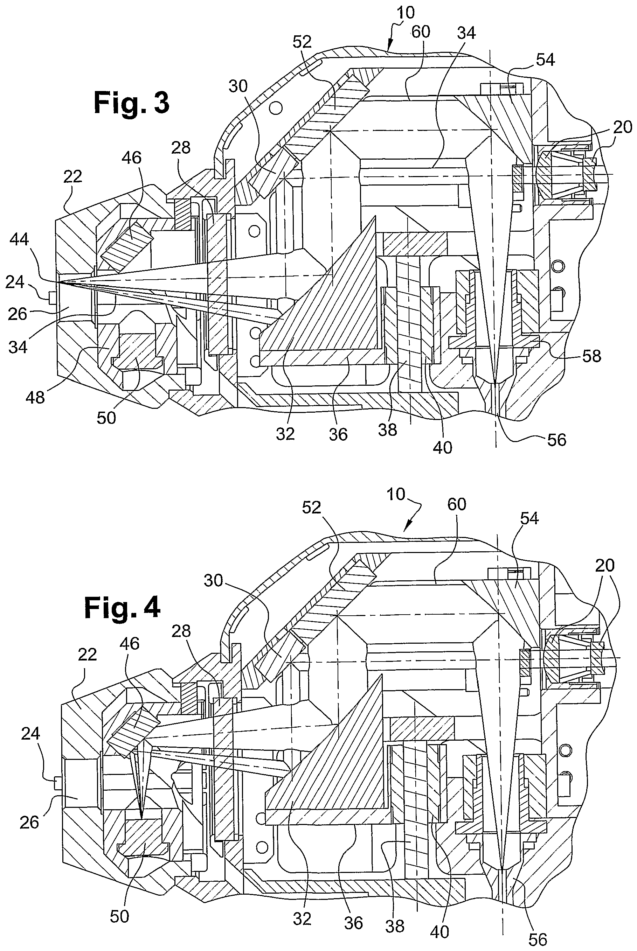

La partie avant du boîtier 10 contient, entre les lentilles 20 de sortie du générateur laser et le hublot 28, un système optique de guidage des impulsions laser et de collecte de lumière, qui comprend essentiellement un miroir plan 30 incliné à 45° sur l'axe optique du générateur laser pour renvoyer verticalement vers le bas les impulsions laser sur une première zone d'un premier miroir parabolique 32 qui réfléchit les impulsions laser en direction du hublot 28 et les focalise à l'extrémité avant de l'embout de mesure 22, destinée à être amenée au contact du matériau ou de l'objet à analyser, comme représenté en figure 3 où le trajet suivi par les impulsions laser est désigné par la référence 34.

Ce premier miroir parabolique 32 est porté par un support 36 déplaçable en translation verticale au moyen d'un système à vis sans fin motorisée 38 sur laquelle est vissé un écrou 40 porté par le support 36, la rotation de la vis 38 permettant de déplacer le premier miroir parabolique 32 en translation le long de l'axe d'incidence des impulsions laser pour que le point 44 de focalisation des impulsions balaye une distance, par exemple de l'ordre du centimètre, sur la surface du matériau ou de l'objet à analyser.

L'invention prévoit que, quand le premier miroir parabolique est en fin de course, par exemple en position supérieure comme représenté en figure 4, il envoie les impulsions laser sur un miroir plan 46 monté sur la surface interne de l'embout de mesure 22 et orienté de façon à réfléchir les impulsions laser vers un échantillon 50 porté par un support 48 monté fixement dans l'embout 22, par exemple en alignement vertical avec le miroir 46 comme représenté au dessin.

Le système optique monté à l'intérieur du boîtier 10 comprend également des moyens de captation de la lumière émise par le plasma généré par les impulsions laser focalisées sur la surface du matériau ou de l'objet à analyser.

Cette lumière est captée au travers du hublot 28 et réfléchie par une seconde zone du premier miroir parabolique 32 en direction d'un second miroir plan 52, placé à côté du premier miroir plan 30 et sur le même support que celui-ci, pour réfléchir la lumière captée vers un second miroir parabolique 54 qui focalise la lumière captée sur l'extrémité d'une fibre optique 56 montée par un connecteur 58 dans un orifice du boîtier 10, cette fibre optique 56 transmettant la lumière captée jusqu'au spectromètre monté dans le coffret 16. Les deux miroirs plans 30, 52 sont à la verticale du premier miroir parabolique 32 et horizontalement au niveau du second miroir parabolique 54.

Le second miroir parabolique 54 est en dehors de l'axe optique du générateur laser 18 et est orienté perpendiculairement au premier miroir parabolique 32.

Le trajet de la lumière captée est désigné par la référence 60 dans les dessins, où l'on voit que la réflexion de la lumière sur le premier miroir parabolique 32, sur le second miroir plan et sur le second miroir parabolique 54 se fait à 90°.

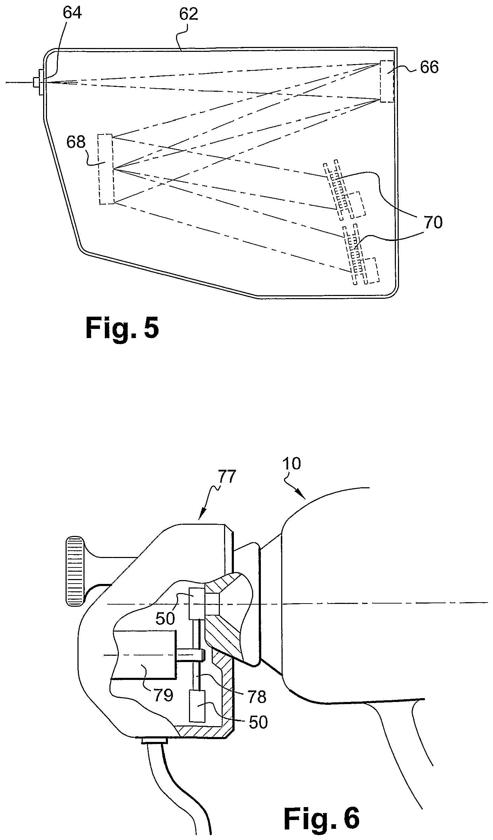

La fibre optique 56 passe par exemple dans la garde de la poignée 12 et aboutit au spectromètre représenté schématiquement en figure 5, qui comprend essentiellement, à l'intérieur d'un boîtier 62, une fente d'entrée 64 alignée avec un réseau de diffraction 66 en regard duquel est monté un miroir plan 68 réfléchissant la lumière diffractée sur deux détecteurs 70 tels par exemple que des barrettes linéaires de photodétecteurs du type CCD ou analogue, les deux détecteurs 70 étant sensiblement juxtaposés et couvrant deux plages différentes du spectre lumineux.

Dans l'exemple de réalisation représenté aux dessins, le générateur laser 18 est du type Nd : YAG émettant un rayonnement infrarouge à une longueur d'onde de 1064 nm. Ce générateur laser est pompé par des diodes optiques fonctionnant en régime impulsionnel et est équipé d'un modulateur électro-optique (Q switch) fonctionnant à 20 Hz, ce qui permet de délivrer des impulsions laser de 10 mJ ayant une durée à mi-hauteur de 5 ns à une cadence de 20 Hz. Le faisceau laser a un profil d'intensité gaussien et son diamètre est d'environ 1 mm à la sortie du générateur 18.

Si nécessaire dans les applications envisagées, la fréquence du faisceau laser peut être doublée, triplée ou quadruplée au moyen de cristaux non linéaires qui sont placés sur le trajet du faisceau laser pour modifier sa longueur d'onde de 1064 nm à 532 nm, puis à 266 nm par exemple.

Les deux lentilles 20 traversées par les impulsions laser à la sortie du générateur 18 sont respectivement divergente et convergente pour augmenter le diamètre du faisceau laser à environ 2,5 mm, afin de réduire la densité de puissance sur le premier miroir parabolique 32 et sur les miroirs plans 30 et 46, et de focaliser les impulsions laser avec un diamètre plus faible sur le matériau ou l'objet à analyser.

Le premier miroir plan 30 qui réfléchit les impulsions laser en direction de la première zone du premier miroir parabolique 32 porte un revêtement diélectrique améliorant sa réflectivité.

La zone du premier miroir parabolique 32 qui reçoit les impulsions laser porte un revêtement diélectrique du même type que celui du premier miroir 30 pour augmenter la réflexion de ces impulsions. Dans l'exemple de réalisation représenté, les rayons de courbure du premier miroir parabolique 32 sont de l'ordre de 65 mm. Cela permet de focaliser les impulsions laser à une distance de 65 mm, correspondant à la face d'extrémité avant de l'embout de mesure 22. Le diamètre du point de focalisation des impulsions laser sur la surface du matériau ou de l'objet à analyser est d'environ 100 µm. Cette dimension est réglable par un choix approprié des lentilles 20 montées en sortie du générateur laser 18.

La seconde zone du miroir parabolique 32, le miroir plan 52 et le second miroir parabolique 54 comportent des revêtements métalliques pour améliorer la réflexion de la lumière captée, par exemple un film multi-couches diélectriques avec une base aluminium pour augmenter la réflectivité dans le spectre visible et en ultraviolet, par exemple de 190 à 900 nm.

Le boîtier 10 contient encore une carte électronique 72 montée sous le générateur laser 18, pour la commande de ce générateur et des différents moteurs, systèmes de sécurité et voyants, ainsi qu'un écran vidéo 74 tel qu'un écran de terminal informatique pour l'affichage des résultats de mesure, monté à l'extrémité arrière du boîtier 10, et relié à des moyens de traitement de l'information qui sont logés dans le coffret 16 et qui reçoivent en entrée les signaux de sortie des détecteurs 70.

Ce dispositif fonctionne de la façon suivante :
Le boîtier 10 dont le poids est d'environ 2 kg, est tenu à la main par la poignée 12 tandis que le coffret 16 dont le poids est d'environ 3 à 4 kg, est posé au sol à côté de l'opérateur ou fixé sur le dos de celui-ci au moyen d'un harnais.

L'opérateur appuie l'embout de mesure 22 sur le matériau ou l'objet à analyser, pour activer les contacts de sécurité 24, et appuie sur la détente 76 de la poignée pour commander le fonctionnement du générateur laser 18, le premier miroir parabolique 32 se trouvant dans sa position la plus basse.

Le générateur laser 18 émet une série d'impulsions laser focalisées en un point de la surface du matériau ou de l'objet à analyser, le nombre d'impulsions émises étant par exemple de 50 à 100 par point de mesure dans l'exemple de réalisation représenté aux dessins. Ces impulsions génèrent un plasma de matière vaporisée qui émet de la lumière dont une partie est captée à travers le hublot 28 et réfléchie par le premier miroir parabolique 32 sur le second miroir plan 52 qui la renvoie sur le second miroir parabolique 54 pour la focaliser sur l'entrée de la fibre optique 56 menant au spectromètre monté dans le coffret 16.

Dans l'exemple de réalisation décrit et représenté aux dessins, les détecteurs linéaires 70 comprennent chacun 2048 photodétecteurs CCD ayant une taille de 13 µm x 500µm et reçoivent des longueurs d'ondes dans les bandes 200-240 nm et 300-340 nm avec une résolution spectrale de 40 pm. L'intégration du rayonnement électromagnétique sur chaque détecteur est synchronisée avec l'émission de l'impulsion laser, avec un délai de par exemple 500 ns entre l'émission de l'impulsion laser et le début de l'intégration du rayonnement.

Le réseau de diffraction 66 est un réseau concave gravé corrigé des aberrations chromatiques et comprenant 1200 traits par millimètre, soit une dispersion de 2,1nm/mm.

Les signaux de sortie de détecteur 70 sont traités par les moyens informatiques contenus dans le coffret 16 et sont affichés sur l'écran 74 du boîtier 10, sous forme d'éléments entrant dans la composition du matériau ou de l'objet à analyser et des concentrations de ces éléments.

Le déplacement en translation du premier miroir parabolique 32 est commandé automatiquement par appui sur la détente 76. Le premier miroir parabolique 32 est déplacé pas à pas de façon à balayer une ligne d'environ 1 cm de long sur la surface du matériau ou de l'objet à analyser, en effectuant une mesure (correspondant au tir de 50 à 100 impulsions laser) tous les millimètres (les 10 premières impulsions laser servant à nettoyer partiellement la surface).

Lorsque le miroir parabolique 32 arrive en fin de course en position supérieure, les impulsions laser sont orientées sur le miroir 46 de l'embout de mesure et réfléchies sur l'échantillon 50, pour la correction d'une éventuelle dérive spectrale du spectromètre et d'une dérive de la puissance du générateur laser, dues à la température par exemple.

La série de mesures réalisées sur le matériau ou l'objet à analyser permet d'éviter les mesures locales fausses dues à des impuretés, ce qui rend possible d'analyser des matériaux faiblement hétérogènes, par exemple des matériaux réfractaires. Cela permet également, grâce un traitement statistique, d'améliorer les performances de l'analyse.

Comme la place dans l'embout de mesure est très limitée, il est difficile de disposer plus d'un ou de deux échantillons 50 sur le porte-échantillon 48. Pour pallier cet inconvénient, l'invention prévoit de monter (fig. 6) un bouchon de calibration 77 sur l'embout de mesure ou à la place de l'embout de mesure en regard du hublot de sortie du boîtier, ce bouchon comprenant un disque tournant motorisé 78 portant une dizaine d'échantillons 50. Le disque 78 est entraîné en rotation par un moteur 79 alimenté par un câble USB par exemple, la rotation du disque 78 permettant de placer les différents échantillons successivement sur l'axe de tir des impulsions laser.

On peut ainsi corriger et vérifier des courbes de calibration utilisées pour les déterminations des concentrations des composants identifiés d'un matériau ou d'un objet analysé.

On peut également effectuer une calibration automatique du dispositif d'analyse, par exemple à chaque changement d'application.

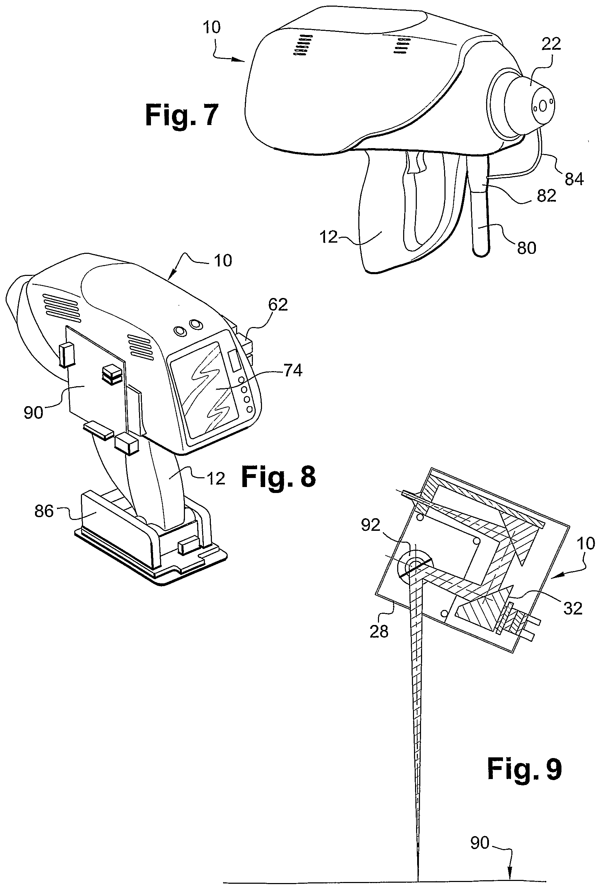

On a représenté schématiquement en figure 7 une variante de réalisation de l'invention, selon laquelle on a ajouté au dispositif des figures 1 à 6 une cartouche 80 de gaz neutre, tel que de l'argon ou de l'azote, qui est reliée par une électrovanne 82 et un conduit 84 à l'embout de mesure 22 pour diffuser le gaz neutre au niveau du plasma formé sur la surface du matériau ou de l'objet à analyser.

De préférence, le gaz neutre n'est pas diffusé de façon continue, mais par intermittences, pour limiter la consommation de gaz.

Cela permet notamment de réaliser in situ des mesures de concentration d'éléments qui sont normalement présents dans l'air ambiant, comme par exemple l'azote, le carbone, l'hydrogène et l'oxygène. On peut ainsi mesurer avec précision le taux de carbone d'un acier, et mesurer des concentrations de composés organiques, notamment dans des matériaux plastiques. Cela permet également d'améliorer la répétabilité des mesures en limitant la contribution de l'air ambiant sur le plasma.

Selon une autre caractéristique de l'invention, on associe au générateur laser une diode laser pour réchauffer le plasma produit par une première impulsion laser fournie par le générateur laser 18. On utilise pour cela une diode laser émettant dans l'infrarouge, par exemple sur une longueur d'onde de 800 nm. Une telle diode peut délivrer une impulsion d'une durée de 200µs avec une énergie de 4 à 20 mJ. On peut également utiliser des combinaisons de plusieurs diodes laser (« stacks ») pour augmenter l'énergie totale réchauffant le plasma (par exemple 20 à 200 mJ).

Le réchauffage du plasma permet de réinjecter de la matière dans le plasma et d'augmenter sa température. Ainsi, le niveau du signal capté est augmenté et la sensibilité de la mesure est améliorée.

Selon une autre variante de réalisation de l'invention, représentée schématiquement en figure 8, on utilise un seul boîtier 10 qui est portable et autonome et qui est alimenté électriquement à partir d'une batterie 86 montée sur la partie inférieure de la poignée 12 du dispositif. Le boîtier du spectromètre raccordé à la fibre optique 56 peut alors être monté sur un côté du boîtier 10, tandis que la carte de commande contrôle et de traitement 90 est fixée sur l'autre côté du boîtier 10.

Le poids du dispositif complet de la figure 8 est de l'ordre de 3,5 kg.

Dans la variante de réalisation de la figure 9 (qui est une vue simplifiée pour faciliter la compréhension), le boîtier 10 du dispositif selon l'invention (non équipé de l'embout 22) est monté au-dessus d'un convoyeur 90 d'une ligne de production, sur lequel sont déposés des matériaux ou des objets à contrôler ou à identifier.

La distance entre le hublot 28 de sortie du boîtier et la surface du convoyeur 90 peut être comprise entre 10 et 100 cm par exemple, le miroir parabolique 32 du boîtier étant conçu pour focaliser les impulsions laser sur les matériaux ou les objets transportés par le convoyeur.

Avantageusement, le boîtier comprend un système 92 de balayage ou de déflexion de faisceau optique, ce qui permet d'effectuer des mesures sur des objets qui ne sont pas posés au centre du convoyeur.

Dans cette variante de réalisation, le boîtier 10 est fixe et on peut l'équiper d'un générateur laser plus puissant.

Les applications du dispositif selon l'invention sont multiples et variées :
- analyse et contrôle de la composition de métaux, en particulier d'aluminium,
- analyse et identification de matériaux plastiques, notamment de plastiques noirs,
- analyse et contrôle d'additifs dans des matériaux plastiques, notamment pour la recherche de charges et d'additifs interdits,
- identification des composants principaux de pièces réfractaires utilisées dans l'industrie, en vue de leur recyclage,
- détection d'explosifs sur le terrain,
- analyse et contrôle de composants de marquage utilisés dans des produits de l'industrie du luxe et de l'industrie pharmaceutique, notamment dans le cadre de lutte anti-contrefaçon.

## Revendications

1. Dispositif d'analyse de matériaux par spectroscopie de plasma, comprenant un générateur laser (18), des moyens de focalisation d'impulsions laser produites par le générateur sur un matériau à analyser, des moyens de captation de la lumière du plasma produit par les impulsions laser à la surface du matériau et de transmission de cette lumière à un spectromètre associé à des photodétecteurs (70) reliés en sortie à des moyens de traitement de l'information, **caractérisé en ce que** les moyens de focalisation des impulsions laser et les moyens de captation de la lumière du plasma sont constitués d'un système optique monté avec le générateur laser (18) et des cartes de contrôle du générateur laser dans un boîtier (10) portable et manipulable d'une main, le système optique étant monté dans le boîtier (10) entre le générateur laser et un hublot de sortie (28) et comprenant un premier miroir parabolique (32) pour la focalisation du faisceau laser sur le matériau à analyser et la captation de la lumière du plasma, et deux miroirs plans (30, 52) agencés par rapport au premier miroir parabolique (32) pour renvoyer vers ce miroir les impulsions laser émises par le générateur (18) et pour renvoyer la lumière du plasma reçue du premier miroir parabolique (32) vers un second miroir parabolique (54) focalisant cette lumière sur une extrémité des moyens de transmission reliés au spectromètre.

2. Dispositif selon la revendication 1, **caractérisé en ce que** les miroirs plans (30, 52) sont situés à côté l'un de l'autre.

3. Dispositif selon la revendication 1 ou 2, **caractérisé en ce que** le premier miroir parabolique (32) est déplaçable le long de l'axe d'incidence des impulsions laser, pour un balayage en translation de la surface du matériau à analyser.

4. Dispositif selon la revendication 3, **caractérisé en ce que** le premier miroir parabolique est monté sur un support (36) déplacé en translation par une vis sans fin motorisée (38) commandée par les moyens de commande (76) du générateur laser.

5. Dispositif selon la revendication 3 ou 4, **caractérisé en ce qu'**un embout de mesure (22) est monté sur le boîtier (10) en regard du hublot de sortie (28) et comprend un miroir de calibration (46) réfléchissant les impulsions laser, lorsque le premier miroir parabolique (32) est dans une position de fin de course, sur un échantillon de calibration (50) monté dans l'embout de mesure (22).

6. Dispositif selon l'une des revendications précédentes, **caractérisé en ce qu'**il comprend un bouchon de calibration (77) destiné à être monté sur le boîtier (10) en regard du hublot de sortie (28), ce bouchon comprenant un support motorisé (78) portant un nombre déterminé d'échantillons (50) de matériaux différents, placés l'un après l'autre sur l'axe d'incidence des impulsions laser à la sortie du boîtier.

7. Dispositif selon l'une des revendications précédentes, **caractérisé en ce que** le premier miroir parabolique (32) comprend une zone de réflexion des impulsions laser et une zone de réflexion de la lumière du plasma, ces deux zones étant adjacentes et extérieures l'une à l'autre et comportant chacune un revêtement réfléchissant adapté aux longueurs d'ondes à réfléchir.

8. Dispositif selon l'une des revendications précédentes, **caractérisé en ce que** le miroir plan (30) de réflexion des impulsions laser comprend un revêtement réfléchissant du type diélectrique et le miroir plan (52) réfléchissant la lumière du plasma comprend un revêtement réfléchissant du type métallique.

9. Dispositif selon l'une des revendications précédentes, **caractérisé en ce que** le second miroir parabolique (54) comporte un revêtement réfléchissant métallique et focalise la lumière du plasma sur l'extrémité d'une fibre optique multimode (56) dont l'autre extrémité est reliée à l'entrée du spectromètre.

10. Dispositif selon l'une des revendications précédentes, **caractérisé en ce que** le spectromètre comprend un boîtier (62) formé avec une fente d'entrée équipée d'un connecteur de raccordement de fibre optique, un réseau de diffraction (66), un miroir de renvoi (68) recevant la lumière diffractée par le réseau, et au moins un détecteur linéaire (70) à photodétecteurs recevant la lumière réfléchie par ce miroir.

11. Dispositif selon la revendication 10, **caractérisé en ce que** le spectromètre comprend deux détecteurs linéaires (70) sensiblement juxtaposés, couvrant deux plages distinctes du spectre lumineux, par exemple de 200 à 240 nm et de 300 à 340 nm.

12. Dispositif selon l'une des revendications précédentes, **caractérisé en ce qu'**il comprend des moyens d'injection d'un gaz neutre sur la zone de formation de plasma à la surface du matériau à analyser, ces moyens comprenant une cartouche (80) de gaz neutre montée sur le boîtier (10) et équipée d'une électrovanne de sortie (82) reliée par un conduit (84) à l'embout de mesure (22).

13. Dispositif selon l'une des revendications précédentes, **caractérisé en ce qu'**il comprend des moyens de réchauffage du plasma produit à la surface du matériau, ces moyens de réchauffage comprenant au moins une diode laser émettant des impulsions focalisées par le premier miroir parabolique (32) sur la zone de formation de plasma.

14. Dispositif selon l'une des revendications précédentes, **caractérisé en ce qu'**il comprend des moyens (74) d'affichage des résultats d'analyse, ces moyens comprenant un écran de terminal informatique monté sur la face arrière du boîtier (10) contenant le générateur laser, pour l'affichage des composants du matériau analysé et des concentrations de ces composants.

15. Dispositif selon l'une des revendications précédentes, **caractérisé en ce qu'**il est monté dans une ligne de production, par exemple au-dessus d'un convoyeur (90) et à une distance de celui-ci comprise entre 10 cm et 100 cm par exemple, et comprend des moyens (92) de balayage ou de déflexion de faisceau optique.

## Patentansprüche

1. Vorrichtung zur Analyse von Werkstoff durch Plasmaspektroskopie, welche einen Lasergenerator (18), Mittel zum Fokussieren von Laserimpulsen, die vom Generator auf einem zu analysierendem Werkstoff erzeugt werden, Mittel zur Erfassung des Lichts des Plasmas, das von den Laserimpulsen an der Oberfläche des Werkstoffs erzeugt wird, und Mittel zur Übertragung dieses Lichts auf ein Spektrometer, das mit Photodetektoren (70) verbunden ist, welche am Ausgang mit informationsverarbeitenden Mitteln verbunden sind, **dadurch gekennzeichnet, dass** die Mittel zur Fokussierung der Laserimpulse und die Mittel zur Erfassung des Lichts des Plasmas aus einem optischen System bestehen, das mit dem Lasergenerator (18) und Kontrollkarten des Lasergenerators in ein tragbares, mit einer Hand bedienbares Gehäuse (10) montiert ist, wobei das optische System in dem Gehäuse (10) zwischen dem Lasergenerator und einem Lichtaustritt (28) montiert ist und einen ersten Parabolspiegel (32) zur Fokussierung des Laserstrahls auf dem zu analysierenden Werkstoff und zur Erfassung des Lichts des Plasmas umfasst, und zwei ebene Spiegel (30, 52), die relativ zum ersten Parabolspiegel (32) so angeordnet sind, dass sie die vom Generator (18) emittierten Laserimpulse auf diesen Spiegel zurück werfen und das vom ersten Parabolspiegel (32) empfangene Licht des Plasmas auf einen zweiten Parabolspiegel (54) zurück werfen, und dieser dieses Licht an einem Ende der mit dem Spektrometer verbundenen Übertragungsmittel fokussiert.

2. Vorrichtung nach Anspruch 1, **dadurch gekennzeichnet, dass** sich die ebenen Spiegel (30, 52) nebeneinander befinden.

3. Vorrichtung nach Anspruch 1 oder 2, **dadurch gekennzeichnet, dass** der erste Parabolspiegel (32) auf der Einfallsachse der Laserimpulse verschoben werden kann, um die Oberfläche des zu analysierenden Werkstoffs translatorisch abzutasten.

4. Vorrichtung nach Anspruch 3, **dadurch gekennzeichnet, dass** der erste Parabolspiegel auf eine Halterung (36) montiert ist, die durch eine, über die Steuermittel (76) des Lasergenerators betätigte motorbetriebene Schnecke (38) translatorisch verschoben wird.

5. Vorrichtung nach Anspruch 3 oder 4, **dadurch gekennzeichnet, dass** eine Messspitze (22) auf das Gehäuse (10) gegenüber dem Lichtaustritt (28) montiert wird und diese einen Kalibrierspiegel (46) umfasst, der die Laserimpulse auf eine in die Messspitze (22) montierte Kalibrierprobe (50) zurück wirft, wenn der erste Parabolspiegel (32) in einer Endlage steht.

6. Vorrichtung nach einem der vorhergehenden Ansprüche, **dadurch gekennzeichnet, dass** sie einen Kalibrierstopfen (77) umfasst, der dazu bestimmt ist, auf das Gehäuse (10) gegenüber dem Lichtaustritt (28) montiert zu werden, wobei dieser Stopfen eine motorbetriebene Halterung (78) umfasst, auf der sich eine bestimmte Anzahl von Proben (50) unterschiedlicher Werkstoffe befinden, die auf der Einfallachse der Laserimpulse am Austritt des Gehäuses hintereinander positioniert sind.

7. Vorrichtung nach einem der vorhergehenden Ansprüche, **dadurch gekennzeichnet, dass** der erste Parabolspiegel (32) einen Reflektorbereich für die Laserimpulse und einen Reflektorbereich für das Licht des Plasmas umfasst, wobei diese beiden Bereiche nebeneinander und außerhalb voneinander liegen, und jeweils eine Reflexionsschicht aufweisen, die für die zu reflektierenden Wellenlängen geeignet ist.

8. Vorrichtung nach einem der vorhergehenden Ansprüche, **dadurch gekennzeichnet, dass** der ebene Spiegel (30) zur Reflexion der Laserimpulse eine dielektrische Reflexionsschicht und der ebene Spiegel (52) zur Reflexion des Lichts des Plasmas eine metallische Reflexionsschicht aufweist.

9. Vorrichtung nach einem der vorhergehenden Ansprüche, **dadurch gekennzeichnet, dass** der zweite Parabolspiegel (54) eine metallische Reflexionsschicht aufweist und er das Licht des Plasmas an einem Ende eines Multi-Mode-Lichtfaserkabels (56) fokussiert, und dessen anderes Ende mit dem Eingang des Spektrometers verbunden ist.

10. Vorrichtung nach einem der vorhergehenden Ansprüche, **dadurch gekennzeichnet, dass** das Spektrometer ein Gehäuse (62) umfasst, das mit einem Eingangsschlitz geformt wurde und ausgestattet ist mit einem Steckverbinder für Lichtfaserkabel, einem Beugungsgitter (66), einem Umlenkspiegel (68), der das gestreute Licht über das Gitter empfängt, und mindestens einem linearen Detektor (70) mit Photodetektoren, die das von diesem Spiegel reflektierte Licht empfangen.

11. Vorrichtung nach Anspruch 10, **dadurch gekennzeichnet, dass** das Spektrometer zwei lineare Detektoren (70) umfasst, die im Wesentlichen nebeneinander angeordnet sind, und zwei unterschiedliche Bereiche des Lichtspektrums, zum Beispiel 200 bis 240 nm und 300 bis 340 nm, abdecken.

12. Vorrichtung nach einem der vorhergehenden Ansprüche, **dadurch gekennzeichnet, dass** sie Mittel zur Einspeisung eines neutralen Gases in den Plasmabildungsbereich an der Oberfläche des zu analysierenden Werkstoffs umfasst, wobei diese Mittel eine Kartusche (80) mit neutralem Gas enthalten, die auf das Gehäuse (10) montiert und mit einem Ablassmagnetventil (82), das über eine Leitung (84) mit der Messspitze (22) verbunden ist, ausgestattet ist.

13. Vorrichtung nach einem der vorhergehenden Ansprüche, **dadurch gekennzeichnet, dass** sie Mittel zum Erhitzen des an der Oberfläche des Werkstoffs erzeugten Plasmas umfasst, wobei diese Erhitzungsmittel mindestens eine Laserdiode umfassen, die Impulse aussendet, welche vom ersten Parabolspiegel (32) im Plasmabildungsbereich fokussiert werden.

14. Vorrichtung nach einem der vorhergehenden Ansprüche, **dadurch gekennzeichnet, dass** sie Mittel (74) zur Anzeige der Analyseergebnisse umfasst, wobei diese Mittel den Bildschirm eines Datenverarbeitungsterminals umfassen, der auf die Rückseite des Gehäuses (10), welches den Lasergenerator enthält, montiert ist, um die Bestandteile des analysierten Werkstoffs und die Konzentrationen dieser Bestandteile anzuzeigen.

15. Vorrichtung nach einem der vorhergehenden Ansprüche, **dadurch gekennzeichnet, dass** sie in eine Produktionslinie, zum Beispiel über einem Förderer (90) in einer Entfernung zwischen 10 cm und 100 cm zu diesem montiert ist, und Mittel (92) zum Abtasten oder zur Ablenkung des Lichtbündels umfasst.

## Claims

1. A device for analyzing materials by plasma spectroscopy, the device comprising a laser generator (18), laser pulse focusing means for focusing laser pulses produced by the generator onto a material to be analyzed, plasma light pick-up means for picking up light from the plasma produced by the laser pulses at the surface of the material, and transmission means for transmitting said light to a spectrometer associated with photodetectors (70) having outputs connected to data processor means, the device being **characterized in that** the laser pulse focusing means and the plasma light pick-up means are constituted by an optical system mounted with the laser generator (18) and laser generator control cards in a housing (10) that is portable and suitable for handling in one hand, the optical system being mounted in the housing (10) between the laser generator and an outlet window (28) and comprising a first parabolic mirror (32) for focusing the laser beam on the material to be analyzed and for picking up the light from the plasma, and two plane mirrors (30, 52) arranged relative to the first parabolic mirror (32) to reflect to said mirror the laser pulses emitted by the generator (18) and to reflect the light from the plasma as received from the first parabolic mirror (32) to a second parabolic mirror (54) that focuses said light on one end of the transmission means connected to the spectrometer.

2. A device according to claim 1, **characterized in that** the plane mirrors (30, 52) are juxtaposed and located next to each other.

3. A device according to claim 1 or claim 2, **characterized in that** the first parabolic mirror (32) is movable along the axis of incidence of the laser pulses so as to scan in translation the surface of the material to be analyzed.

4. A device according to claim 3, **characterized in that** the first parabolic mirror is mounted on a support (36) that is moved in translation by a motor-driven wormscrew (38) controlled by the control means (76) of the laser generator.

5. A device according to claim 3 or claim 4, **characterized in that** a measurement endpiece (22) is mounted on the housing (10) facing the outlet window (28) and includes a calibration mirror (46) for reflecting the laser pulses when the first parabolic mirror (32) is in an end-of-stroke position onto a calibration sample (50) that is mounted in the measurement endpiece (22).

6. A device according to any preceding claim, **characterized in that** it includes a calibration fitting (77) for mounting on the housing (10) facing the outlet window (28), the fitting including a motor-driven support (78) carrying a determined number of samples (50) of different materials, the samples being placed one after another on the incidence axis of the laser pulses at the outlet from the housing.

7. A device according to any preceding claim, **characterized in that** the first parabolic mirror (32) includes a laser pulse reflection zone and a plasma light reflection zone, these two zones being adjacent and separate from each other, each including a reflective coating that is adapted to the wavelengths it is to reflect.

8. A device according to any preceding claim, **characterized in that** the plane mirror (30) for reflecting laser pulses has a reflective coating of the dielectric type and the plane mirror (52) for reflecting light on the plasma includes a reflective coating of the metallic type.

9. A device according to any preceding claim, **characterized in that** the second parabolic mirror (54) includes a metallic reflective coating and focuses the light from the plasma onto the end of a multimode optical fiber (56) having its other end connected to the input of the spectrometer.

10. A device according to any preceding claim, **characterized in that** the spectrometer comprises a housing (62) formed with an inlet slot fitted with a connector for coupling to the optical fiber, a diffraction grating (66), a mirror (68) receiving the light diffracted by the grating, and at least one linear detector (70) having photodetectors that receive the light reflected by said mirror.

11. A device according to claim 10, **characterized in that** the spectrometer has two substantially juxtaposed linear detectors (70) covering distinct ranges of the light spectrum, e.g. 200 nm to 240 nm and 300 nm to 340 nm.

12. A device according to any preceding claim, **characterized in that** it includes means for injecting an inert gas into the zone where plasma is formed at the surface of the material to be analyzed, said means comprising an inert gas cartridge (80) mounted on the housing (10) and fitted with an outlet solenoid valve (82) connected via a pipe (84) to the measurement endpiece (22).

13. A device according to any preceding claim, **characterized in that** it includes heater means for heating the plasma produced at the surface of the material, the heater means comprising at least one laser diode emitting pulses focused by the first parabolic mirror (32) on the plasma formation zone.

14. A device according to any preceding claim, **characterized in that** it includes means (74) for displaying analysis results, said means comprising a computer terminal screen mounted on the rear face of the housing (10) containing the laser generator for the purpose of displaying the ingredients of the analyzed material and the concentrations of said ingredients.

15. A device according to any preceding claim, **characterized in that** it is mounted in a production line, e.g. above a conveyor (90) and at a distance therefrom lying in the range 10 cm to 100 cm, for example, and includes means (92) for scanning or deflecting a light beam.
